Europäisches Patentamt

European Patent Office

Office européen des brevets

(19)

(11) Publication number: **0 159 374**
**B1**

# EUROPEAN PATENT SPECIFICATION

(12)

(45) Date of publication of patent specification: **07.12.88**

(51) Int. Cl.⁴: **F 16 L 25/00, E 21 B 17/042**

(21) Application number: **84104532.1**

(22) Date of filing: **21.04.84**

(54) Reducer coupling and positioner tool for the coupling.

(43) Date of publication of application:
**30.10.85 Bulletin 85/44**

(45) Publication of the grant of the patent:
**07.12.88 Bulletin 88/49**

(84) Designated Contracting States:
**DE FR GB**

(56) References cited:
**US-A-1 474 905**
**US-A-2 642 034**
**US-A-3 201 158**
**US-A-4 393 900**

(73) Proprietor: **PUMPTECH N.V.**
**Atlantic House Noorderlaan 147 Bus 5C**
**B-2030 Antwerpen (BE)**
(84) **DE GB**

(73) Proprietor: **COMPAGNIE DES SERVICES**
**DOWELL SCHLUMBERGER**
**20, rue Jean-Jaurès**
**F-92800 Puteaux (FR)**
(84) **FR**

(72) Inventor: **Cameron, Donald C.**
**7219 E. 67th Street**
**Tulsa Oklahoma 74133 (US)**

(74) Representative: **Hann, Michael, Dr. et al**
**Patentanwälte Dr. Michael Hann Dr. H.-G.**
**Sternagel Sander Aue 30**
**D-5060 Bergisch Gladbach 2 (DE)**

## Description

The invention relates to a reducer coupling useful for connecting conduit sections of different sizes, and a positioner tool for moving the coupling into a desired position for making the connection.

US—A—1,474,905 describes a tool joint such as is used in rotary drilling for oil wells, the drill pipes being a similar size and each having a collar screwed to the end thereof. Both of the collars are adapted to fit together by screwing. The collar comprises a central opening which extends therethrough. The collar body has a cavity at one end and a second cavity at the opposite end, and a tapered projection which has an external thread extending from the body through the second cavity beyond the top end of a rim surrounding the second cavity.

There are many industrial operations in which a reducer coupling is used as a connection for joining two conduit sections of different sizes. The usual conduit connections are those where two sections of pipe are connected, or a pipe is connected to a valve connection, or a pipe is connected to a pump, or the like. For example, in oil field operations such as well stimulation and completion, it is common practice to use fittings known as swage nipples to connect the production casing with smaller piping. In these operations fluids are delivered from the smaller piping, usually under high pressure, through the nipple and into the production casing. To set up for such an operation, the usual procedure is to first lift the fitting into a "hook-up" position above the production casing. The large end of the nipple is then threaded into the production casing and turned down tight with a strap wrench, which fastens around the nipple just below the small end. Following this, the small end is connected into the delivery pipe with a conventional union fitting.

Swage nipples now in use have several drawbacks, which make them less than satisfactory for the operations described above and for other commercial applications. One problem is that swage nipples are structurally weak, particularly at the point where the wrench clamps around the fitting. The weakness is caused by severe deformation of the construction material during fabrication of the fitting. As the strap wrench is tightened on the nipple, it tends to slip and score the metal surface, causing further weakness at this point on the fitting. This weakness is particularly undesirable because of the high pressure conditions the fitting must endure during normal use.

The structural weakness of swage nipples, plus the fact that the small end of each fitting defines a "neck" portion, creates another problem. Sometimes, particularly after an operation is completed, the fittings are dropped or otherwise mis-handled. Frequently, such treatment causes the neck of the fitting to break off, so that it must be repaired or replaced for the next operation. This is both costly and inconvenient.

It is the object of the present invention to provide a reducer coupling which avoids the disadvantages described above and it is much cheaper to make than the swage nipples now available.

According to the invention a coupling means for connecting conduit sections comprises a coupler body having a first cavity in one end and a second cavity in the opposite end of the coupler body, a bridge portion between the first and the second cavities, a hub extending from the bridge portion into the first cavity and a male screw thread on the outside surface of the wall of the hub, a central opening extending lengthwise through the bridge portion and the hub, a first upstanding rim defining the periphery of the first cavity and a second upstanding rim defining the periphery of the second cavity, wherein the second rim is provided with a thread, characterized in that,

(i) the coupling is a one piece reducer coupling adapted for connecting a conduit section of one size to a conduit section of a different size,

(ii) the thread is a male screw thread cut into the outside of the coupler body adjacent to the second cavity.

(iii) a gasket is fitted into the opening near the outer end of the hub.

The invention includes a method of coupling conduit sections by coúpling means threaded to the conduit sections wherein the coupling means comprising a coupler body having a first cavity in one end and a second cavity in the opposite end of the coupler body, a bridge portion between the first and second cavities, a hub extending from the bridge portion into the first cavity and a male screw thread on the outside surface of the wall of the hub, a central opening extending lengthwise through the bridge portion and the hub, a first upstanding rim defining the periphery of the first cavity and a second upstanding rim defining the periphery of the second cavity wherein the second rim is provided with a thread, characterized in that the coupling is a one piece reducer coupling adapted for connecting a conduit section of one size to a conduit section of a different size, the thread is a male screw thread cut into the outside of the coupler body adjacent to the second cavity and a gasket is fitted into the opening near the top of the hub which is used in combination with a positioner tool comprising an elongated pin having a shoulder segment which divides the pin into a hanger section above the shoulder segment and a spindle section which extends below the shoulder segment and a wing nut for securing said positioner tool to the reducer coupling by fitting the spindle section of the tool down into the opening of the coupling so that the shoulder segment seats against the gasket and threading the wing nut on the hub and tightening down until a lip on the nut is seated against the top face on the shoulder segment and threading the reducer coupling into a conduit section, unscrewing the wing nut from the hub, removing the tool and connecting the hub to the second conduit section.

The present reducer coupling is a one-piece structure which can be easily lifted into the "hook-up" position described above, and coupled to the production casing using a tool designed for that purpose. In addition, the present coupling is a much more durable structure than the prior swage nipples and the smaller end of the fitting has a hub connection which is protected from breaking off, or sustaining other damage during handling of the fitting.

The reducer coupling of this invention is designed for connecting conduit sections of different sizes. The structure according to the invention is used together with a positioner tool for moving the reducer coupling into a desired "hook-up" position. This tool is also designed to engage another tool, such as a wrench, for connecting the reducer coupling to a conduit section. Means for securing the positioner tool to the coupling is also a component which is also used.

The hanger section of the tool is adapted for hooking into a means for moving the reducer coupling into a desired position. The securing means engages the fastener means on the hub and seats against the shoulder on the positioner tool, to fasten the positioner tool to the reducer coupling.

Figure 1 is a view, partly in section, of the several components of this invention, which include a reducer coupling, positioner tool for the coupling, and nut for securing the positioner tool to the coupling.

Figure 2 is an exploded view of the various components of the invention shown in Figure 1.

Figure 3 is a front elevational view, in section, of a preferred embodiment of the reducer coupling of this invention.

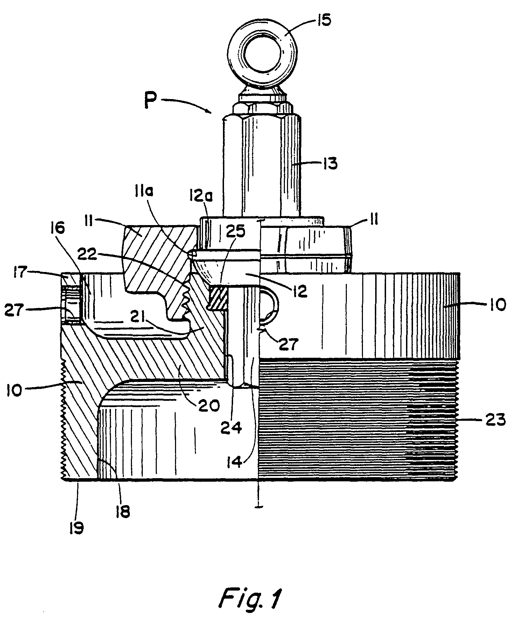

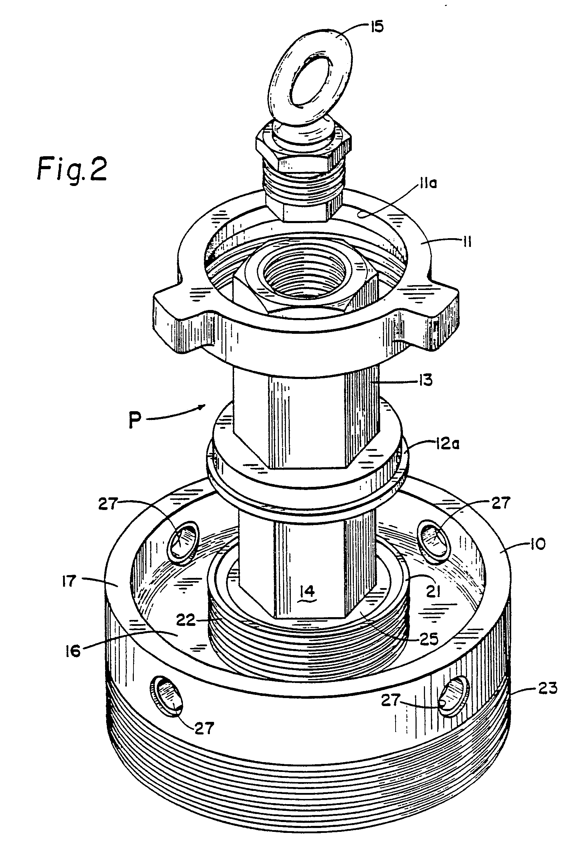

In the drawing, referring particularly to Figures 1 and 2, the basic components of the invention consist of a reducer coupling 10; a positioner tool P, and a wing nut 11. The positioner tool P is generally made up of an elongate pin having a shoulder segment 12 which divides the pin into a hanger section 13, above the shoulder segment, and a spindle section 14, which extends below the shoulder segment. The hanger section 13 includes an eyebolt fastener 15, which threads into the hanger section (note Figure 2).

The reducer coupling 10 consists of a one-piece body structure. At the top of the structure is a first cavity 16, which is defined by a concave surface. An upstanding rim 17 defines the periphery of cavity 16. At the bottom of the body structure is a second cavity 18 which is defined by a concave surface. The periphery of cavity 18 is defined by an upstanding rim 19. The solid part of the body structure between cavities 16 and 18 is a bridge portion 20. The body structure of this coupling includes a hub 21, which is integral with the bridge portion 20, and which extends into the cavity 16. A male screw thread 22 is cut into the outside surface of the hub wall.

The reducer coupling also includes a male screw thread 23, which is cut into the outside surface of the body of the coupling adjacent to the cavity 18. There is a central opening 24 in the body structure, which extends lengthwise through the hub 21 and the bridge portion 20. A gasket 25 is fitted into (seated in) the opening 24 near the top of the hub, to provide a seal against fluid leakage. Wing nut 11 provides a means for securing the positioner tool P to the reducer coupling 10. It can be seen that the spindle section 14 fits down into opening 24, so that the bottom of the shoulder segment 12 seats against gasket 25. Once the positioner tool is set down into the opening 24, wing nut 11 is threaded on hub 21 and tightened down until a lip 11a on the nut is seated against a top face 12a on shoulder segment 12.

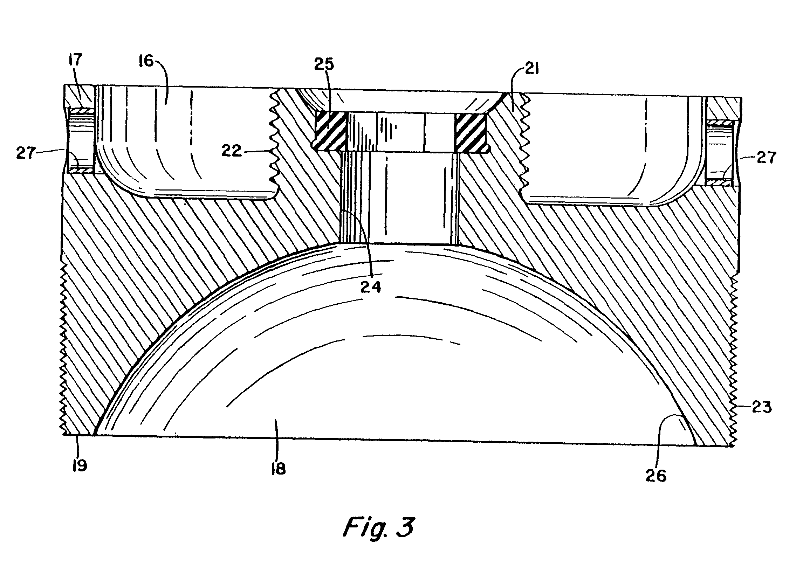

A preferred embodiment of a reducer coupling of this invention is illustrated in Figure 3. This reducer coupling differs from the embodiment illustrated in Figure 1 only by the configuration of the bottom cavity in the body structure of the coupling. For this reason the same reference numerals are used to identify the similar parts of this embodiment of the coupling. As mentioned earlier, the bottom cavity 18 of the reducer coupling illustrated in Figure 1 has a concave surface. As shown in Figure 3, however, the surface of the bottom cavity 18 of this reducer coupling is a hemispherical surface, as indicated by numeral 26. In the actual practice of this invention, it is contemplated that machining the coupling with a hemispherical surface will add significantly to the capability of the coupling to withstand high pressure.

The invention can be illustrated by describing the use of the reducer coupling 10, the positioner tool P, and wing nut 11, in a typical oil field operation in which the positioner tool P is first seated into the reducer coupling 10 and secured to the coupling by the wing nut 11, in the manner described earlier. A line from a lifting rig is hooked into the eyebolt 15 and the coupling is lifted into its hook-up position above the open end of the production casing. The lift rig and production casing are not illustrated in the drawing.

The next step is to thread the reducer coupling into the production casing by means of threads 23. The eyebolt 15 is mounted on a swivel, so that it is easier for the operator to line up the threads 23 with the corresponding threads on the production casing. As the reducing coupling is "started" onto the production casing it is sometimes partly tightened down with a wrench, in the form of a short, round bar (not shown). The bar wrench is inserted, sequentially, into several openings 27 provided in the upper rim 17 of the coupling, to rotate the coupling a few turns until it is snug in position on the production casing. The coupling is then further tightened down on the casing by applying a wrench to the hanger section 13 of the positioner tool P. The wrench (not shown) has a grip specifically designed to fit the hexagonal shape of the hanger section 13 and more force can be applied to the wrench, if needed, by hammering on the handle.

The next step is to unscrew the wing nut 11 from hub 21, so that the positioner tool P can be pulled out of the reducer coupling 10. After removing the positioner tool, the hub 21 of the reducer coupling is connected to the fluid delivery pipe (not shown), having a size different from the size of the casing. This connection is made using a standard female sub unit fitting, which includes the wing nut 11. The reducer coupling is then in its normal operating position.

Referring to the positioner tool P, as illustrated and described herein, the hanger section 13 of this tool has a hexagonal shape (cross-section). In actual practice, however, the hanger section of the positioner tool may be made in any one of several shapes, such as round, elliptical, square rectangular, triangular, or other known shapes. The spindle section 14 of the positioner tool, as shown in the drawing, also has a hexagonal shape; but this part of the tool can also be made in various other shapes.

As mentioned earlier, the hub 21 of the present reducer coupling 10 is protected from breaking off, or sustaining other damage, so that it has a distinct advantage over the prior swage nipples. One reason the hub 21 is not vulnerable to breakage or other damage, is because it is "recessed" into the top cavity 16 of the coupling, that is, it does not extend above the top edge of the upper rim 17. Also, when the wing nut 11 is in place on the hub 21 it protects the hub threads 22 from possible damage during handling of the fitting.

## Claims

1. A coupling means for connecting conduit sections comprising a one-piece coupler body having a first cavity (16) in one end and a second cavity (18) in the opposite end of the coupler body, a bridge portion (20) between the first and the second cavities (16, 18) a hub (21) extending from the bridge porton (20) into the first cavity (16) and a male screw thread (22) on the outside surface of the wall of the hub (21), a central opening (24) extending lengthwise through the bridge portion (20) and the hub (21), a first upstanding rim (17) defining the periphery of the first cavity and a second upstanding rim (19) defining the periphery of the second cavity (18), wherein the second rim (19) is provided with a thread (23), characterized in that,

(i) the coupling (10) is a reducer coupling adapted for connecting a conduit section of one size to a conduit section of a different size,

(ii) the thread (23) is a male screw thread cut into the outside of the coupler body adjacent to the second cavity (18).

(iii) a gasket (25) is fitted into the opening (24) near the outer end of the hub (21).

2. The coupling means of Claim 1, characterized in that the second or bottom cavity (18) of the coupler body has a hemispherical surface (26).

3. The coupling means of Claims 1 or 2, characterized in that, the hub (21) is integral with the bridge portion (20).

4. The coupling means of the Claims 1 to 4, characterized in that, a plurality of spaced openings (27) extend through the first rim (17).

5. A method of coupling conduit sections by coupling means threaded to the conduit sections wherein the coupling means comprising a one-piece coupler body having a first cavity (16) in one end and a second cavity (18) in the opposite end of the coupler body, a bridge portion (20) between the first and second cavities (16, 18), a hub (21) extending from the bridge portion (20) into the first cavity (16) and a male screw thread (22) on the outside surface of the wall of the hub (21), a central opening (24) extending lengthwise through the bridge portion (20) and the hub (21), a first upstanding rim (17) defining the periphery of the first cavity and a second upstanding rim (19) defining the periphery of the second cavity (18) wherein the second rim (19) is provided with a thread (23), characterized in that, the coupling (10) is a reducer coupling adapted for connecting a conduit section of one size to a conduit section of a different size, the thread (23) is a male screw thread cut into the outside of the coupler body adjacent to the second cavity (18) and a gasket (25) is fitted into the opening (24) near the outer end of the hub (21), which coupling is used in combination with a positioner tool (P) comprising an elongated pin having a shoulder segment (12) which divides the pin into a hanger section (13) above the shoulder segment (12) and a spindle section (14) which extends below the shoulder segment (12) and a wing nut (11) for securing said positioner tool (P) to the reducer coupling (10) by fitting the spindle section (14) of the tool (P) down into the opening (24) of the coupling (10) so that the shoulder segment (12) seats against the gasket (25) and threading the wing nut (11) on the hub (21) and tightening down until a lip (11a) on the nut (11) is seated against the top face (12a) on the shoulder segment (12) and threading the reducer coupling (10) into a conduit section, unscrewing the wing nut (11) from the hub (21), removing the tool (P) and connecting the hub (21) to the second conduit section.

## Patentansprüche

1. Kupplungseinrichtung zum Verbinden von Rohrabschnitten mit einem einstückigen Kupplungskörper mit einem ersten Hohlraum (16) in einem Ende und einem zweiten Hohlraum (18) im gegenüberliegenden Ende des Kupplungskörpers, einem Brückenglied (20) zwischen den ersten und zweiten Hohlräumen (16, 18), einer Nabe (21), die sich vom Brückenglied (20) in den ersten Hohlraum (16) erstreckt und mit einem Außengewinde (22) auf den Außenfläche der Wande der Nabe (21), einer sich längs durch das Brückenglied (20) und die Nabe (21) erstreckenden zentralen Öffnung (24), einem ersten aufrechtstehenden Rand (17), der den Umfang des ersten Hohlraumes bestimmt und einem zweiten aufrecht stehenden Rand (19) der den Umfang des zweiten Hohlraums (18) bestimmt, wobei der zweite Rand (19) mit einem Gewinde (23) versehen ist, dadurch gekennzeichnet, daß

(i) Kupplung (10) eine Reduzierkupplung zum Verbinden eines Rohrabschnittes einer Größe mit einem Rohrabschnitt einer unterschiedlichen Größe ist,

(ii) das Gewinde (23) ein in die Außenseite eines Kupplungskörpers neben dem zweiten Hohlraum (18) geschnittenes Außengewinde ist,

(iii) eine Dichtung (25) in der Öffnung (24) in der Nähe des äußeren Endes der Nabe (21) eingelegt ist.

2. Kupplungseinrichtung nach Anspruch 1, dadurch gekennzeichnet, daß der zweite Hohlraum oder Bodenraum (18) des Kupplungskörpers eine halbkugelförmige Oberfläche (26) aufweist.

3. Kupplungseinrichtung nach Ansprüchen 1 oder 2, dadurch gekennzeichnet, daß die Nabe (21) in das Brückenglied (20) integriert ist.

4. Kupplungseinrichtung nach Ansprüchen 1 bis 4 dadurch gekennzeichnet, daß eine Vielzahl von Öffnungen (27) sich in Abstand von einander durch den ersten Rand (17) erstrecken.

5. Verfahren zum Verbinden von Rohrabschnitten mit Kupplungseinrichtungen die auf die Rohrabschnitte aufgeschraubt sind, wobei die Kupplungseinrichtungen aufweisen einen einstückigen Kupplungskörper mit einem ersten Hohlraum (16) in einem Ende und einem zweiten Hohlraum (18) im gegenüberliegenden Ende des Kupplungskörpers, ein Brückenglied (20) zwischen den ersten und zweiten Hohlräumen (16, 18), eine Nabe (21), die sich vom Brückenglied (20) in den ersten Hohlraum (16) erstreckt und ein Außengewinde (22) auf der Außenoberfläche der Wand der Nabe (21), eine sich längs durch das Brückenglied (20) und die Nabe (21) erstreckende zentrale Öffnung (24), einen ersten aufrecht stehenden Rand (17), der den Umfang des ersten Hohlraumes bestimmt und einen zweiten aufrechten Rand (19), der den Umfang des zweiten Hohlraumes (18) bestimmt, wobei der zweite Rand (19) mit einem Gewinde (23) versehen ist, dadurch gekennzeichnet, daß die Kupplung (10) eine Reduzierkupplung zum Verbinden eines Rohrschnitts einer Größe mit einem Rohrabschnitt einer unterschiedlichen Größe ist, das Gewinde (23) ein in die Außenseite des Kupplungskörpers neben dem zweiten Hohlraum (18) geschnittenes Außengewinde ist und eine Dichtung (25) in der Öffnung (24) in der Nähe des äußeren Endes der Nabe (21) eingelegt ist, wobei die Kupplung in Verbindung mit einem Stellwerkzeug (P), das einen langgestreckten Zapfen mit einem Schulterteil (12) aufweist, das den Zapfen in einem Aufhängeteil (13) oberhalb des Schulterteils (12) und einen Spindelteil (14) unterhalb des Schulterteils (12) teilt und mit einer Flügelmutter (11) zum Befestigen des Stellwerkzeuges (P) an der Reduzierkupplung verwendet wird, durch Einbringen des Spindelteils (14) des Werkzeuges (P) in die Öffnung (24) der Kupplung (10), sodaß das Schulterteil (12) an der Dichtung (25) anliegt und Aufschrauben der Flügelmutter (11) auf den Zapfen (21) und Festziehen bis eine Lippe (11a) der Mutter (11) an der oberen Fläche (12a) des Schulterteils (12) anliegt und Einschrauben der Reduzierkupplung (10) in einen Rohrabschnitt, Abschrauben der Flügelmutter (11) vom Zapfen (21) und Entfernen des Werkzeuges (P) und Verbinden des Zapfens (21) mit dem zweiten Rohrabschnitt.

## Revendications

1. Un dispositif d'accouplement pour relier des tronçons de conduits, comprenant un corps d'accouplement monobloc comportant une première cavité (16) dans une extrémité du corps d'accouplement et une seconde cavité (18) dans l'extrémité opposée, une partie formant pontet (20) entre la première et la seconde cavité (16, 18), un moyeu (21) s'étendant depuis la partie formant pontet (20) jusque dans la première cavité (16) et un filetage mâle (22) prévu sur la surface extérieure de la paroi du moyeu (21), une ouverture centrale (24) s'étendant longitudinalement au travers de la partie formant pontet (20) et au travers du moyeu (21), une première bordure (17) dirigée vers le haut et définissant la périphérie de la première cavité et une seconde bordure (19) dirigée vers le haut et définissant la périphérie de la seconde cavité (18), la seconde bordure (19) étant pourvue d'un filetage (23), caractérisé en ce que:

(i) le dispositif d'accouplement (10) est un accouplement réducteur adapté pour relier un tronçon de conduit d'une dimension avec un tronçon de conduit d'une dimension différente,

ii) le filetage (23) est un filetage mâle usiné dans la surface extérieure du corps d'accouplement dans une zone adjacente à la seconde cavité (18),

(iii) une garniture d'étanchéité (25) est montée dans l'ouverture (24) à proximité de l'extrémité extérieure du moyeu (21).

2. Le dispositif d'accouplement selon la revendication 1, caractérisé en ce que la seconde cavité ou cavité de base (18) du corps d'accouplement comporte une surface hémisphérique (26).

3. Le dispositif d'accouplement selon les revendications 1 ou 2, caractérisé en ce que le moyeu (21) est solidaire de la partie formant pontet (20).

4. Le dispositif d'accouplement selon les revendications 1 à 3, caractérisé en ce qu'une pluralité d'ouvertures espacées (27) s'étendent au travers de la première bordure (17).

5. Un procédé d'accouplement de tronçons de conduits par des dispositifs d'accouplement vissés sur les tronçons de conduits, les dispositifs d'accouplement comprenant un corps d'accouplement monobloc comportant une première cavité (16) dans une extrémité du corps d'accouplement et une seconde cavité (18) dans l'extrémité opposée, une partie formant pontet (20) entre la première et la seconde cavité (16, 18) un moyeu (21) s'étendant depuis la partie formant pontet (20) jusque dans la première cavité (16) et un filetage mâle (22) prévu sur la surface extérieure de la paroi du moyeu (21), une ouverture centrale (24) s'étendant longitudinalement au travers de la partie formant pontet (20) et au travers du moyeu (21), une première bordure (17) dirigée vers le haut et définissant la périphérie de la première cavité et une seconde bordure (19) dirigée vers le haut et définissant la périphérie de la seconde cavité (18) la seconde bordure (19) étant pourvue d'un filetage (23), caractérisé en ce que le dispositif d'accouplement (10) est un accouplement réducteur adapté pour relier un tronçon de conduit d'une dimension avec un tronçon de conduit d'une dimension différente, le filetage (23) est un filetage mâle usiné dans la surface extérieure du corps d'acouplement dans une zone adjacente à la seconde cavité (18) et une garniture d'étanchéité (25) est montée dans l'ouverture (24) à proximité de l'extrémité extérieure du moyeu (21), ledit accouplement étant utilisé en combinaison avec un outil de positionnement (P) comprenant un fût allongé pourvu d'un segment à épaulement (12) qui divise le fût en une section de suspension (13) située au-dessus du segment à épaulement (12) et une section formant broche (14) qui s'étend en dessous du segment à épaulement (12), ainsi qu'un écrou à oreilles (11) pour fixer ledit outil de positionnement (P) sur l'accouplement réducteur (10), le processus consistant à engager la partie formant broche (14) de l'outil (P) vers le bas dans l'ouverture (24) de l'accouplement (10) de telle sorte que le segment à épaulement (12) vienne s'appuyer contre la garniture d'étanchéité (25) puis à visser l'écrou à oreilles (11) sur le moyeu (21) et à le serrer jusqu'à ce qu'une lèvre (11a) de l'écrou (11) vienne s'appuyer contre la face supérieure (12a) du segment à épaulement (12), puis à engager l'accouplement réducteur (10) dans un tronçon de conduit, à dévisser l'écrou à oreilles (11) du moyeu (21), à enlever l'outil (P) et à relier le moyeu (21) avec le second tronçon de conduit.

Fig. 1

Fig.2

Fig. 3